# FASCICULE DE BREVET EUROPEEN

(11) **EP 2 936 636 B1**
(45) Date de publication et mention de la délivrance du brevet: **18.07.2018**
(21) Numéro de dépôt: 13821871.4
(22) Date de dépôt: 17.12.2013
(51) Int. Cl.: H02G 3/12

(54) **BOITE ELECTRIQUE D'ENCASTREMENT A FIXATION AUTOMATIQUE SUR UNE PAROI**
VERDRAHTUNGSDOSE ZUM EINBAU MIT AUTOMATISCHER BEFESTIGUNG AN EINER WAND
WIRING BOX TO BE FLUSH-MOUNTED WITH AUTOMATIC FASTENING TO A WALL

(30) Priorité: 20.12.2012 FR 1203506
(43) Date de publication de la demande: 28.10.2015
(73) Titulaire: Legrand France, 87000 Limoges (FR); Legrand SNC, 87000 Limoges (FR)
(72) Inventeur: CAILLE, Jean-Loup, F-87510 Peyrilhac (FR); MAZIERE,Laurent, F-87220 Feytiat (FR)
(74) Mandataire: Jacobacci Coralis Harle
(86) Numéro de dépôt international: PCT/FR2013/053127
(87) Numéro de publication internationale: WO 2014/096678

(56) Documents cités:
- DE-B3-102008 014 382
- FR-A- 1 396 991
- FR-A1- 2 003 950
- FR-A1- 2 339 318

## Description

### DOMAINE TECHNIQUE AUQUEL SE RAPPORTE L'INVENTION

La présente invention concerne de manière générale l'installation de modules d'appareillage électrique en position encastrée dans des parois.

Elle concerne plus particulièrement une boîte d'encastrement comportant :
- une paroi latérale qui délimite un logement intérieur d'accueil d'un module d'appareillage, et
- des moyens de fixation à la paroi qui comprennent au moins un volet monté mobile au travers d'une ouverture pratiquée dans la paroi latérale, entre une position rentrée dans laquelle il ne gêne pas l'insertion de la boîte d'encastrement dans une cavité prévue dans une paroi et une position déployée dans laquelle il bloque la boîte d'encastrement dans ladite cavité.

L'invention trouve une application particulièrement avantageuse dans l'installation dans une cloison creuse d'une telle boîte d'encastrement, en vue d'y loger un module d'appareillage présentant par exemple une fonction d'interrupteur, de va-et-vient, de variateur électrique, de prise de courant, de prise réseau (RJ45), de prise de téléphone (RJ11), de prise VDI ou équivalent (HDMI, ...), de voyant, de thermostat, ou encore de détecteur (de fumée, d'inondation, de température, de mouvement ou de lumière).

### ARRIERE-PLAN TECHNOLOGIQUE

Généralement, une boîte d'encastrement à encastrer dans une paroi murale comporte une paroi latérale fermée à l'arrière par un fond et bordée à l'avant par un trottoir adapté à s'appliquer contre la face avant de la paroi murale.

Lorsque la paroi murale est une cloison creuse, une telle boîte d'encastrement comprend le plus souvent deux griffes qui interviennent en position diamétralement opposée et qui, sous le contrôle de vis, sont aptes à venir s'accrocher à la cloison creuse.

L'un des inconvénients de ces boîtes d'encastrement est que leur installation s'avère fastidieuse, notamment lorsqu'il s'agit de manoeuvrer les vis pour faire remonter les griffes le long de la paroi latérale de la boîte jusqu'à ce qu'elles s'accrochent à la cloison creuse.

Un autre inconvénient est que ces boîtes sont onéreuses du fait du nombre important d'éléments à fabriquer et à assembler.

On connaît alors du document DE102008014382 un boîte de sol qui comporte un corps annulaire et un anneau arrière.

Le corps annulaire comporte une paroi latérale externe globalement cylindrique, dans laquelle sont découpés des volets flexibles. Il comporte également, à l'avant de la paroi latérale externe, une bride périphérique dans laquelle sont prévus des trous pour le passage de vis.

L'anneau arrière comporte également des ouvertures pour le passage des vis, ainsi que des cavités dans lesquelles sont logés des écrous en prise avec les vis. Il comporte également des pattes qui délimitent des rampes.

Alors, lorsque l'utilisateur visse les vis dans les écrous, l'anneau arrière remonte vers la bride périphérique de telle sorte que les rampes des pattes forcent les volets à fléchir vers l'extérieur pour s'accrocher au sol.

L'inconvénient de cette boîte de sol est que son installation nécessite encore l'utilisation de vis, ce qui rend son utilisation peu pratique.
On connaît par ailleurs du document FR1396991 ou de FR2003950 une boîte d'encastrement qui permet de pallier ces difficultés.

Cette boîte d'encastrement comporte une pluralité de volets qui sont découpés dans sa paroi latérale et qui sont recourbés vers l'extérieur. Les extrémités arrière de ces volets sont rattachées à la paroi latérale et font office de charnière, tandis que leurs extrémités libres avant font saillie à l'extérieur de la paroi latérale, à des hauteurs différentes.

Lors de l'engagement de cette boîte d'encastrement au travers d'une ouverture pratiquée dans un panneau d'une cloison creuse, ces volets se replient naturellement dans le prolongement de la paroi latérale afin de ne pas former obstacle à cet engagement.

Une fois la boîte d'encastrement engagée dans l'ouverture, certains de ces volets se déploient de telle sorte que leurs extrémités libres viennent s'appuyer contre la face arrière du panneau, de manière à retenir la boîte d'encastrement dans l'ouverture.

Si l'utilisation de volets de hauteurs différentes permet à la boîte d'encastrement d'être utilisée sur des panneaux d'épaisseurs différentes, elle ne lui permet toutefois pas d'être utilisée sur tout type de panneau, quelle que soit l'épaisseur de ce dernier.

Ces volets ne permettent par ailleurs pas d'assurer un blocage rigide de la boîte d'encastrement sur la paroi, notamment en rotation.

### OBJET DE L'INVENTION

Afin de remédier aux inconvénients précités de l'état de la technique, la présente invention propose une boîte d'encastrement telle que définie dans l'introduction, dans laquelle chaque volet présente :
- une partie interne qui fait au moins en partie saillie dans le logement intérieur lorsque le volet est en position rentrée, et
- une face externe qui est au moins en partie recouverte par une couche de matière compressible faisant saillie à l'extérieur de la paroi latérale lorsque le volet est en position déployée.

Ainsi, grâce à l'invention, lorsqu'un module d'appareillage est inséré à l'intérieur de la boîte d'encastrement, il va venir en appui contre la partie interne de chaque volet. Cet appui va permettre de repousser chaque volet en position déployée de telle manière que la couche de matière compressible qui le recouvre vienne en prise avec la paroi.

Il n'y a donc pas d'appui entre deux surfaces dures (le volet et la paroi), puisque la couche de matière compressible s'interpose entre ces deux surfaces dures.

Grâce à son caractère compressible, la couche de matière compressible va alors pouvoir se comprimer plus ou moins, en fonction de l'épaisseur de la paroi. Cette boîte d'encastrement est donc utilisable sur des parois d'épaisseurs différentes.

La retenue de la boîte d'encastrement dans la cavité prévue dans la paroi sera alors assurée par friction, la couche de matière compressible empêchant tout arrachement de la boîte d'encastrement hors de cette cavité.

Par ailleurs, en prévoyant dans la paroi une cavité de diamètre très légèrement inférieur au diamètre de la boîte d'encastrement (mesuré au niveau de la couche de matière compressible), on s'assurera que lors de l'engagement de la boîte d'encastrement dans cette cavité, la couche de matière compressible se comprimera très légèrement. Ainsi, la couche de matière compressible sera en mesure de maintenir la boîte d'encastrement dans cette cavité jusqu'à ce que l'installateur y rapporte le module d'appareillage.

D'autres caractéristiques avantageuses et non limitatives de la boîte d'encastrement conforme à l'invention sont les suivantes :
- la couche de matière compressible recouvre l'ensemble de la face externe dudit volet et déborde de ce volet pour recouvrir une partie de la face externe de la paroi latérale, tout autour de ladite ouverture ;
- la couche de matière compressible s'étend sur l'ensemble du contour de la paroi latérale ;
- la couche de matière compressible présente, au niveau de chaque volet, une surépaisseur ;
- ladite surépaisseur est constituée de picots ou de nervures parallèles ;
- ladite surépaisseur comporte au moins deux nervures parallèles qui sont décalées en hauteur ;
- chaque volet comporte au moins une nervure rigide en saillie de sa face externe, qui est au moins partiellement recouverte par ladite surépaisseur ;
- lorsque le volet est en position rentrée, sa partie interne présente une face intérieure qui délimite au moins une rampe inclinée vers l'avant par rapport à la paroi latérale ;
- chaque volet comporte des moyens de rappel automatique en position rentrée lorsqu'aucun effort n'est exercé sur lui ;
- chaque volet est mobile à rotation par rapport à la paroi latérale, et présente une extrémité libre tournée vers l'arrière ;
- ladite nervure rigide s'étend sur une partie seulement de la hauteur du volet, en majeure partie du côté de l'extrémité libre du volet ;
- chaque volet vient de formation avec au moins une partie de la paroi latérale par moulage d'une seule pièce, et se rattache au bord de l'ouverture par au moins une patte faisant office de charnière ;
- la couche de matière compressible est rapportée ou surmoulée sur la paroi latérale ; et
- il est prévu une ouverture de passage d'un conducteur électrique et ladite couche de matière compressible obture ladite ouverture de passage.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée sur laquelle apparaissent un panneau d'une cloison creuse, une boîte d'encastrement selon l'invention à fixer au panneau, et un module d'appareillage à engager dans la boîte d'encastrement ;
- la figure 2 est une vue schématique d'une surépaisseur de la couche de matière compressible de la boîte d'encastrement de la figure 1 ;
- les figures 3 à 5 sont des vues schématiques en perspective de trois variantes de réalisation de la surépaisseur de la figure 2 ;
- la figure 6 est une vue schématique en coupe longitudinale de la boîte d'encastrement de la figure 1, sur laquelle les volets sont représentés en position rentrée ;
- la figure 7 est une vue schématique en coupe longitudinale de la boîte d'encastrement de la figure 1, sur laquelle les volets sont représentés en position déployée ;
- la figure 8 est une vue schématique assemblée du panneau de la cloison creuse, de la boîte d'encastrement et du module d'appareillage de la figure 1, représentés en coupe longitudinale ;
- la figure 9 est une vue similaire à celle de la figure 8, sur laquelle le panneau de la cloison creuse est plus épais que celui représenté sur la figure 8 ;
- la figure 10 est une vue schématique en perspective d'une première variante de réalisation de la boîte d'encastrement de la figure 1 ;
- la figure 11 est une vue schématique en perspective du corps de la boîte d'encastrement de la figure 10 ;
- les figures 12 et 13 sont des vues schématiques en coupe illustrant le montage de la boîte d'encastrement de la figure 10 dans le panneau d'une cloison creuse ; et
- la figure 14 est une vue schématique en perspective d'une seconde variante de réalisation de la boîte d'encastrement de la figure 1.

En préliminaire on notera que les éléments identiques ou similaires des différentes variantes de réalisation de l'invention représentées sur les différentes figures seront, dans la mesure du possible, référencés par les mêmes signes de référence et ne seront pas décrits à chaque fois.

L'installation d'un module d'appareillage électrique sur une paroi nécessite l'utilisation d'une boîte d'encastrement. Une telle boîte d'encastrement permet non seulement de fixer rigidement le module d'appareillage électrique à la paroi mais également de le protéger.

Par module d'appareillage électrique, on entend tout type de module tel qu'un module de prise de courant, d'interrupteur, de va-et-vient, de variateur électrique, de prise réseau (RJ45), de prise de téléphone (RJ11), de voyant, ou encore de détecteur (de fumée, d'inondation, de température, de mouvement ou de lumière).

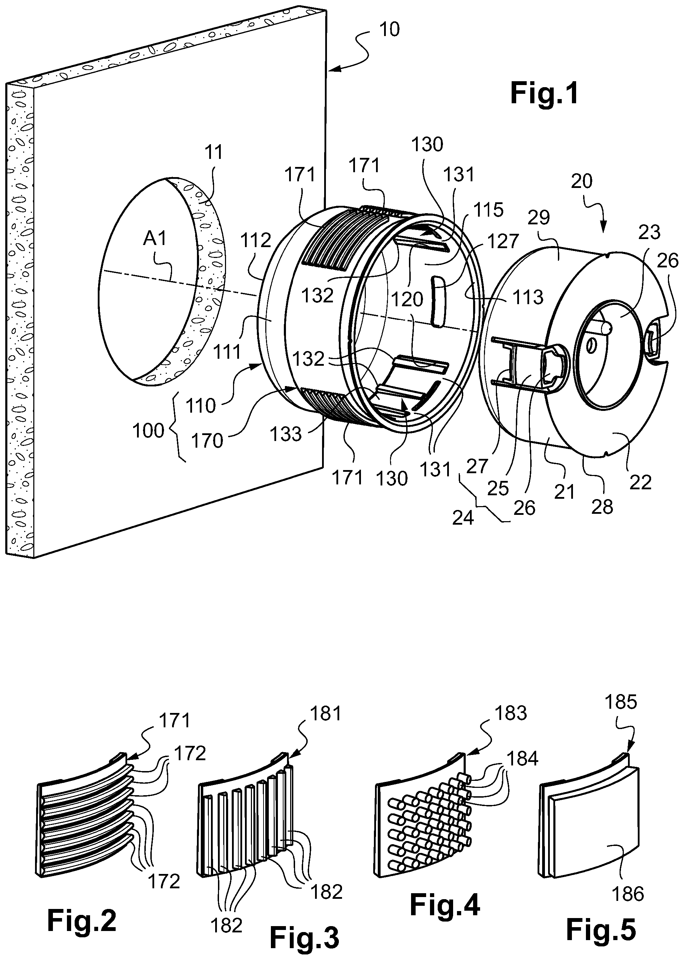

On a représenté sur la figure 1 une telle boîte d'encastrement 100, qui est prévue pour être encastrée à l'intérieur d'une cavité 11 pratiquée dans une paroi murale 10 en vue d'accueillir un module d'appareillage électrique 20.

Dans le mode de réalisation représenté sur les figures, et de manière préférentielle, la boîte d'encastrement 100 est plus précisément prévue pour être encastrée dans une cloison creuse.

On rappelle à ce sujet que, de manière connue, une telle cloison creuse est généralement composée d'une ossature métallique (formée de montants verticaux et de rails horizontaux non représentés) et de panneaux de plâtre 10 rapportés sur l'une au moins des deux faces de l'ossature métallique.

Comme le montre la figure 1, la cavité pratiquée dans cette cloison creuse est ici simplement formée par une ouverture circulaire 11 réalisée à la scie cloche dans l'un des panneaux de plâtre 10.

Dans la description, les termes « avant » et « arrière » seront alors utilisés par rapport à la direction du regard de l'installateur du module d'appareillage électrique 20 dans cette ouverture circulaire 11. Ainsi, les termes avant et arrière désigneront respectivement le lieu tourné vers l'extérieur de la cloison creuse et le lieu tourné vers l'intérieur de la cloison creuse.

Tel qu'il est représenté sur la figure 1, le module d'appareillage électrique 20 comporte un socle 21 et un mécanisme d'appareillage qui est logé à l'intérieur du socle 21 et dont seule la partie fonctionnelle 23 débouche du socle 21, à l'avant de celui-ci.

Ce socle 21 comporte à cet effet une paroi cylindrique 29 de révolution autour d'un axe A1 (correspondant alors à l'axe d'engagement du module d'appareillage à l'intérieur de la boîte d'encastrement), qui est fermée à l'avant par une paroi frontale 22 et qui est ouverte à l'arrière, ainsi qu'une coque arrière (non visible sur les figures) qui ferme l'ouverture arrière de sa paroi cylindrique 29.

La paroi frontale 22 présente une ouverture circulaire au travers de laquelle émerge la partie fonctionnelle 23 du mécanisme d'appareillage. Le module d'appareillage électrique étant ici formé par un module de prise de courant 20, la partie fonctionnelle 23 du mécanisme d'appareillage est ici formée par un puits d'insertion d'une fiche électrique.

Ce module de prise de courant 20 ne faisant pas l'objet de la présente invention, il ne sera pas ici décrit plus en détail.

Comme le montre plus particulièrement la figure 1, la boîte d'encastrement 100 comprend quant à elle un corps 110 qui présente ici une forme générale cylindrique mais qui pourrait bien entendu présenter une forme différente, notamment parallélépipédique.

Ce corps 110 comporte une paroi latérale 111 tubulaire de révolution autour de l'axe A1, qui est fermée à l'arrière par une paroi de fond 112 et qui s'ouvre à l'avant par une ouverture 113. Ce corps 110 délimite ainsi un logement intérieur 115 d'accueil du module de prise de courant 20.

Pour sa fixation dans l'ouverture circulaire 11 pratiquée dans le panneau de plâtre 10, le corps 110 de la boîte d'encastrement 100 comporte un trottoir extérieur 114 qui longe, ici continûment, le bord de l'ouverture 113 et qui est adapté à prendre appui contre la face avant du panneau de plâtre 10, tout autour de l'ouverture circulaire 11. Ainsi, ce trottoir extérieur 114 permet de bloquer le corps 110 de la boîte d'encastrement 100 vers l'arrière.

Pour le bloquer vers l'avant, il est prévu des moyens de fixation qui sont adaptés à s'accrocher au panneau de plâtre 10. Ces moyens de fixation font plus particulièrement l'objet de la présente invention.

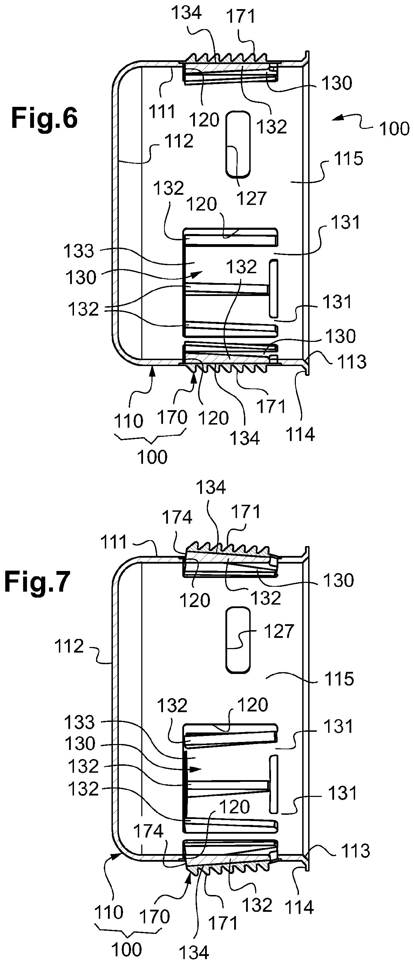

Comme le montre la figure 1, ces moyens de fixation comprennent au moins un volet 130 qui est monté mobile au travers d'une ouverture 120 pratiquée dans la paroi latérale 111 du corps 110 de la boîte d'encastrement 100, entre une position rentrée (figure 6) dans laquelle il ne gêne pas l'insertion de la boîte d'encastrement 100 dans l'ouverture circulaire 11 pratiquée dans le panneau de plâtre 10 et une position déployée (figure 7) dans laquelle il bloque la boîte d'encastrement 100 dans cette ouverture circulaire 11.

Selon une caractéristique particulièrement avantageuse de l'invention, chaque volet 130 présente une partie interne 132 qui fait au moins en partie saillie dans le logement intérieur 115 lorsque le volet 130 est en position rentrée, et une face externe 134 qui est au moins en partie recouverte par une couche de matière compressible 170 faisant saillie à l'extérieur de la paroi latérale 111 lorsque le volet 130 est en position déployée.

Ici, chaque volet 130 vient de formation avec le corps 110 de la boîte d'encastrement 100, par moulage d'une seule pièce en matière isolante (ici du polypropylène), tandis que la couche de matière compressible 170 est rapportée ou surmoulée sur le corps 110 de la boîte d'encastrement 100.

Comme le montre la figure 1, il est ici prévu quatre volets 130 identiques, qui sont situés à une même distance de la paroi de fond 112 et qui sont regroupés côte-à-côte par paires.

Ces volets 130 étant tous identiques, nous n'en décrirons ici qu'un seul.

L'ouverture 120 au travers de laquelle se déplace ce volet 130 présente une forme rectangulaire, avec des bords avant et arrière situés dans des plans orthogonaux à l'axe A1.

Le volet 130 est comme découpé dans cette ouverture 120. Il comporte ainsi une plaque principale 133 rectangulaire de dimensions identiques, au jeu près, à celles de l'ouverture 120, dont la courbure autour de l'axe A1 est égale à celle de la paroi latérale 111.

Le volet 130 se rattache par son bord avant au bord avant de l'ouverture 120, au moyen de deux pattes 131 écartées l'une de l'autre, qui viennent de formation avec le corps 110 de la boîte d'encastrement 100 et qui font office de charnière.

Le volet 130 est ainsi mobile à rotation par rapport à la paroi latérale 111 du corps 110 de la boîte d'encastrement 100 autour d'un axe sensiblement confondu avec son bord avant. Dès lors, le bord arrière du volet 130 forme son extrémité libre.

Grâce à leur formation d'une seule pièce avec le corps 110 de la boîte d'encastrement 100, ces deux pattes 131 forment des moyens de rappel automatique du volet 130 en position rentrée lorsqu'aucun effort n'est exercé sur celui-ci. De cette manière, au repos, la plaque principale 133 du volet 130 s'étend dans le prolongement de la paroi latérale 111 du corps 110.

Comme cela a été mentionné supra, une partie interne du volet 130 fait saillie dans le logement intérieur 115 lorsque le volet 130 est en position rentrée.

Dans le mode de réalisation représenté sur les figures 1 à 9, cette partie interne est ici formée par trois nervures 132 distinctes et identiques, qui s'étendent en saillie de la face intérieure de la plaque principale 133 du volet 130, parallèlement à l'axe A1, depuis le bord avant jusqu'au bord arrière de cette plaque principale 133 (voir figure 1).

Ces trois nervures 132 présentent chacune une épaisseur croissante depuis le bord avant jusqu'au bord arrière de la plaque principale 133. Leurs faces intérieures forment ainsi des rampes inclinées vers l'avant lorsque le volet 130 est en position rentrée.

Ces rampes sont ici planes, mais elles pourraient également être concaves.

Le diamètre du socle 21 du module de prise de courant 20 est alors ajusté au diamètre intérieur de la paroi latérale 111 du corps 110 de la boîte d'encastrement 100, de manière que lorsqu'il est engagé dans celui-ci, il vient appuyer contre les rampes définies par les nervures 132 des volets 130, ce qui permet de pousser ces volets 130 en position déployée.

La couche de matière compressible 170 prévue sur la face extérieure de la plaque principale 133 de chaque volet 130 permet alors, quand les volets 130 sont repoussés en position déployée, de faire l'interface entre les volets 130 et l'ouverture circulaire 11 pratiquée dans le panneau de plâtre 10, en se comprimant au besoin.

Cette couche de matière compressible 170 est alors réalisée dans un matériau plus souple que celui utilisé pour fabriquer le corps 110 de la boîte d'encastrement 100. Ce matériau est ainsi prévu pour se comprimer au moins deux fois plus, à force de compression égale, que le matériau du corps 110.

La dureté de ce matériau est ici choisie pour être comprise entre 10 et 80 Shore A. De cette manière, la couche de matière compressible 170 peut se comprimer de telle sorte qu'elle permet le déploiement des volets 130 mais qu'elle empêche l'extraction de la boîte d'encastrement 100 hors de l'ouverture circulaire 11.

Ce matériau est également choisi pour être plus rugueux que celui utilisé pour fabriquer le corps de la boîte d'encastrement 100.

Le matériau choisi ici est un élastomère thermoplastique, à savoir du « polystyrène-b-poly(éthylène-butylène)-b-polystyrène » (plus connu sous l'acronyme SEBS).

Comme le montre bien la figure 1, cette couche de matière compressible 170 forme ici préférentiellement un bandeau de largeur constante, qui s'étend sur l'ensemble du contour de la paroi latérale 111 du corps 110 de manière à l'entourer.

La largeur et la position de cette couche de matière compressible 170 sont ajustées de telle manière qu'elle recouvre entièrement les quatre volets 130, en débordant au-dessus des bords avant et en dessous des bords arrière de ces derniers.

Elle assure donc l'étanchéité de la boîte d'encastrement 100 autour des volets 130.

Comme le montre la figure 7, la couche de matière compressible 170 présente une élasticité suffisante pour ne pas former obstacle au déploiement des volets 130. Ainsi, lors de ce déploiement, une partie 174 de la couche de matière compressible 170 s'étire le long du bord arrière de chaque volet 130.

Comme le montre la figure 1, la couche de matière compressible 170 présente une épaisseur constante, excepté au niveau de chacun des volets 130 où elle forme une surépaisseur 171.

Telle qu'elle est représentée sur la figure 2, cette surépaisseur 171 est constituée de nervures parallèles 172, ici au nombre de sept, qui s'étendent en longueur dans des plans orthogonaux à l'axe A1.

Ces nervures présentent des sections transversales en formes de dièdres, avec un flanc avant situé dans un plan orthogonal à l'axe A1 et un flanc arrière incliné par rapport à celui-ci. L'inclinaison des flancs arrière facilite l'engagement de la boîte d'encastrement 100 dans l'ouverture circulaire 11 pratiquée dans le panneau de plâtre 10, tandis que l'orientation des flancs avant participe au blocage de la boîte d'encastrement 100 dans cette ouverture circulaire 11.

En variante, comme le montre la figure 3, on pourrait prévoir que la surépaisseur 181 soit constituée de nervures parallèles 182, par exemple au nombre de huit, s'étendant en longueur selon des axes parallèles à l'axe A1.

Encore en variante, comme le montre la figure 4, on pourrait prévoir que la surépaisseur 183 soit constituée de picots cylindriques 184 d'axes perpendiculaires à l'axe A1.

Selon une autre variante représentée sur la figure 5, on pourrait prévoir que la surépaisseur 185 soit simplement formée par un tampon 186, c'est-à-dire par une plaquette rectangulaire d'épaisseur constante.

Préférentiellement, la couche de matière compressible 170 est surmoulée sur le corps 110 de la boîte d'encastrement 100.

En variante, elle pourrait être simplement rapportée élastiquement ou collée sur le corps de la boîte d'encastrement.

Le corps 110 de la boîte d'encastrement 100 comporte par ailleurs classiquement au moins une ouverture de passage d'un conducteur électrique dans le logement intérieur 115, pour la connexion du module de prise de courant 20.

Cette ouverture de passage sera préférentiellement obturée par un opercule défonçable ou par une membrane perçable.

La membrane perçable pourra être constituée par la couche de matière compressible 170 elle-même, notamment dans le cas où l'ouverture de passage du conducteur électrique sera située dans la paroi latérale 111 du corps 110 de la boîte d'encastrement 100. Lorsque l'ouverture de passage du conducteur électrique sera située dans la paroi de fond 112 du corps 110 de la boîte d'encastrement 100, on pourra prévoir que la couche de matière compressible 170 recouvre l'ensemble de la face externe du corps 110 de la boîte d'encastrement 100, pour obturer cette ouverture de passage.

Dans l'un ou l'autre de ces deux cas, on pourra prévoir que la couche de matière compressible 170 présente un rétrécissement de matière au niveau de l'ouverture de passage, pour faciliter son perçage.

Comme le montre la figure 1, pour la fixation du module de prise de courant 20, la paroi latérale 111 du corps 110 de la boîte d'encastrement 100 présente deux fenêtres 127 diamétralement opposées ainsi qu'un chanfrein périphérique et conique qui longe son ouverture 113.

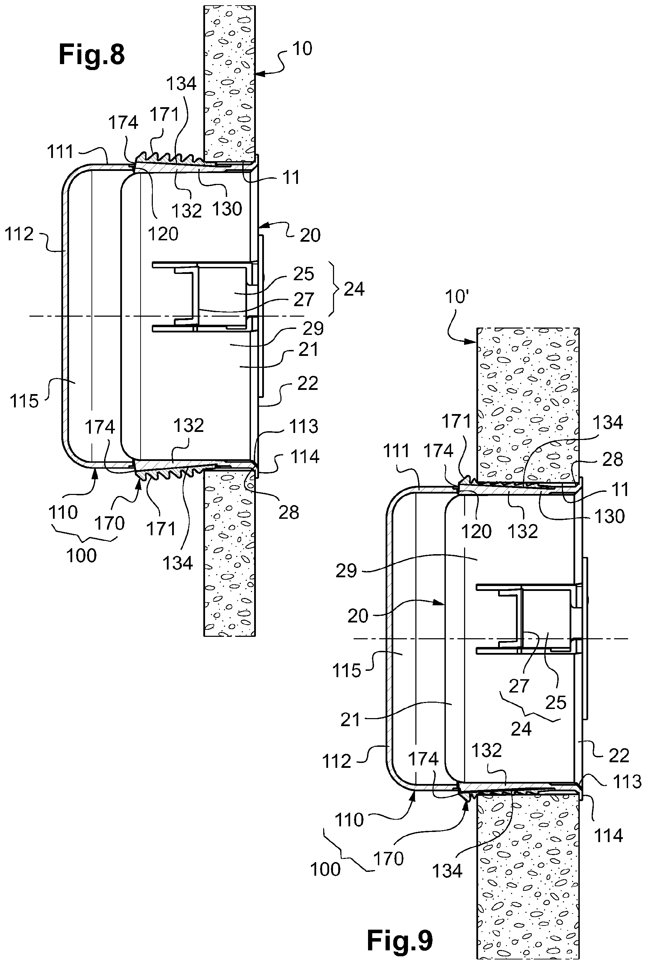

Comme le montrent les figures 8 et 9, le module de prise de courant 20 comporte en correspondance une collerette 28 conique qui longe continûment le bord de sa paroi frontale 22 et qui est adaptée à prendre appui contre le chanfrein périphérique du corps 110 de la boîte d'encastrement 100. Cette collerette 28 permet ainsi de bloquer le module de prise de courant 20 dans la boîte d'encastrement 100, vers l'arrière.

Pour son blocage vers l'avant, le module de prise de courant 20 comporte des moyens d'encliquetage adaptés à s'accrocher aux fenêtres 127.

En l'espèce, ces moyens d'encliquetage 24 comportent deux pattes 25 diamétralement opposées, qui sont déformables en flexion vers l'intérieur et qui sont découpées dans la paroi cylindrique 29 du socle 21 du module de prise de courant 20. Ces deux pattes 25 portent chacune sur leurs faces externes une dent d'encliquetage 27 prévue pour s'accrocher aux bords des fenêtres 127.

Ici, chaque fenêtre rectangulaire 127 présente une largeur égale, au jeu près, à la largeur de la dent d'encliquetage 27, si bien qu'elle permet de bloquer le module de prise de courant 20 en rotation autour de l'axe A1 par rapport à la boîte d'encastrement 100.

Chaque fenêtre rectangulaire 127 est en outre prévue à hauteur des volets 130, si bien qu'elle est obturée par la couche de matière compressible 170 qui assure ainsi l'étanchéité.

Les moyens d'encliquetage 24 comportent par ailleurs des moyens de manoeuvre 26 accessibles par la face avant de la paroi frontale 22 du socle 21, qui permettent à l'installateur de forcer les pattes de flexion 25 à fléchir vers l'intérieur pour extraire au besoin le module de prise de courant 20 hors de la boîte d'encastrement 100.

L'installation de cette boîte d'encastrement 100 dans l'ouverture circulaire 11 pratiquée dans le panneau de plâtre 10 est alors réalisée de la manière suivante.

Au moins une gaine de cheminement de câble est tout d'abord tirée à l'extérieur de la cloison creuse, au travers de l'ouverture circulaire 11, puis est engagée au travers de l'ouverture de passage prévue en correspondance dans la boîte d'encastrement 100.

La boîte d'encastrement 100 est alors simplement poussée au travers de l'ouverture circulaire 11, de manière que son trottoir extérieur 114 s'appuie contre la face avant du panneau de plâtre 10.

Ici, le diamètre de l'ouverture circulaire 11 est prévu de telle manière que lors de cette opération, les surépaisseurs 171 de la couche de matière compressible 170 viennent au contact du bord de l'ouverture circulaire 11, ce qui permet de bloquer sommairement la boîte d'encastrement 100 dans cette ouverture circulaire 11.

A titre d'exemple, le diamètre du corps 110 de la boîte d'encastrement 100 étant ici de 78 mm et le diamètre de la couche de matière compressible 170 étant de 80 mm (au niveau des surépaisseurs 171), l'ouverture circulaire 11 est prévue pour présenter un diamètre compris entre ces deux valeurs, par exemple égal à 79 mm.

Lorsque le module de prise de courant 20 est à disposition de l'installateur, les fils électriques situés à l'intérieur de la gaine de cheminement de câbles sont connectés au module de prise de courant 20.

Le module de prise de courant 20 est alors simplement poussé dans la boîte d'encastrement 100, de manière que ses moyens d'encliquetage 24 s'accrochent aux fenêtres 127 prévues dans la paroi latérale 111 de son corps 110.

Lors de cette insertion du module de prise de courant 20 dans la boîte d'encastrement 100, les volets 130 sont automatiquement repoussés en position déployée de telle sorte que la couche de matière compressible 170 vient en prise avec le bord de l'ouverture circulaire 11 pratiquée dans le panneau de plâtre 10. La rugosité de la couche flexible 170 permet alors de bloquer solidement la boîte d'encastrement 100 dans l'ouverture circulaire 11.

Sur les figures 8 et 9, on a représenté deux panneaux de plâtre 10, 10' d'épaisseurs différentes. Comme on peut le constater sur ces figures, le caractère compressible de la couche de matière compressible 170 permet de rattraper les différences de dimensions entre ces deux panneaux de plâtre 10, 10', si bien que la boîte d'encastrement 100 peut se fixer solidement dans l'ouverture circulaire 11 quelle que soit l'épaisseur du panneau de plâtre choisi (généralement comprise entre 10 et 26 mm).

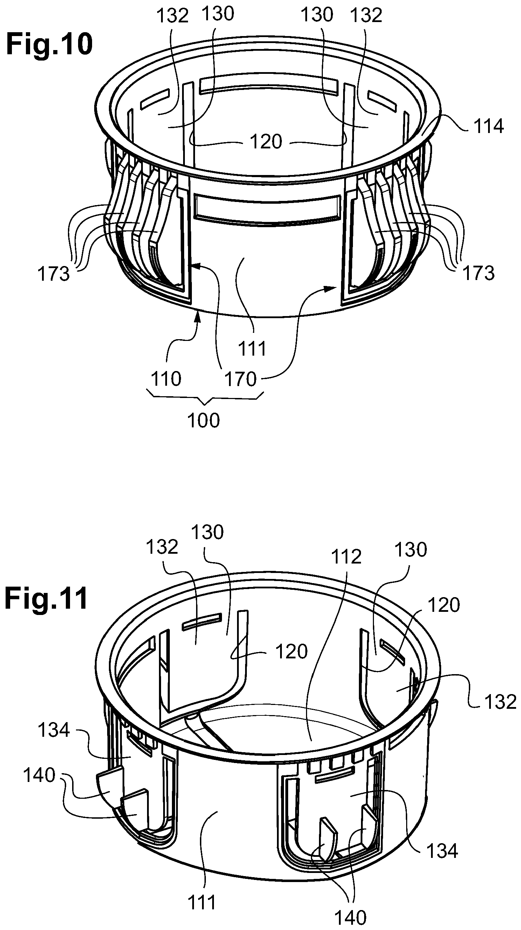

Sur les figures 10 à 13, on a représenté une première variante de réalisation de la boîte d'encastrement 100.

Comme le montre la figure 10, dans cette variante, il est prévu que la face externe de chaque volet 130 porte une couche de matière compressible 170. La couche de matière compressible 170 recouvrant chaque volet 130 se prolonge ici autour de ce volet 130, sur le corps 110 de la boîte électrique 100, de manière à assurer l'étanchéité autour des volets 130. Les couches de matière compressible 170 recouvrant les volets 130 ne se rejoignent toutefois pas ici.

Chaque couche de matière compressible 170 présente quatre nervures parallèles 173 qui s'élèvent vers l'extérieur de la boîte d'encastrement 100 et qui s'étendent en longueur de l'avant vers l'arrière de la boîte d'encastrement 100.

Ces nervures parallèles 173 présentent ici des formes identiques. Elles présentent toutes une hauteur qui varie et qui est maximale à mi-hauteur de la boîte. Les tranches extérieures de ces nervures parallèles 173 présentent ainsi chacune un profil globalement triangulaire, avec une partie avant concave (qui favorise leur accrochage à l'arrière du panneau de plâtre 10), et une partie arrière convexe.

Comme le montre la figure 11 (sur laquelle les couches de matière compressible 170 n'ont pas été représentées), chaque volet 130 comporte au moins une nervure rigide 140 en saillie de sa face externe 134, qui est partiellement recouverte par l'une des nervures parallèles 173.

Ici, il est prévu que chaque volet 130 porte deux nervures rigides 140 adaptées à être partiellement recouvertes par deux des nervures parallèles 173.

Pour ne pas entraver la déformation de ces nervures parallèles 173 lorsque celles-ci s'accrochent au panneau de plâtre 10, il est prévu que ces nervures rigides 140 ne s'étendent pas jusqu'aux bords avant des volets 130. Au contraire, elles s'étendent sur une partie seulement de la hauteur des volets 130, en majeure partie du côté de l'extrémité libre arrière des volets 130.

Ici, chaque nervure rigide 140 s'étend en longueur depuis le bord d'extrémité libre arrière du volet 130, vers l'avant, sur une longueur inférieure à la moitié de la hauteur du volet 130.

Les deux nervures rigides 140 portées par chaque volet 130 présentent des formes identiques. Elles présentent chacune une tranche extérieure de forme convexe, qui se confond avec la tranche extérieure de la nervure parallèle 173 correspondante.

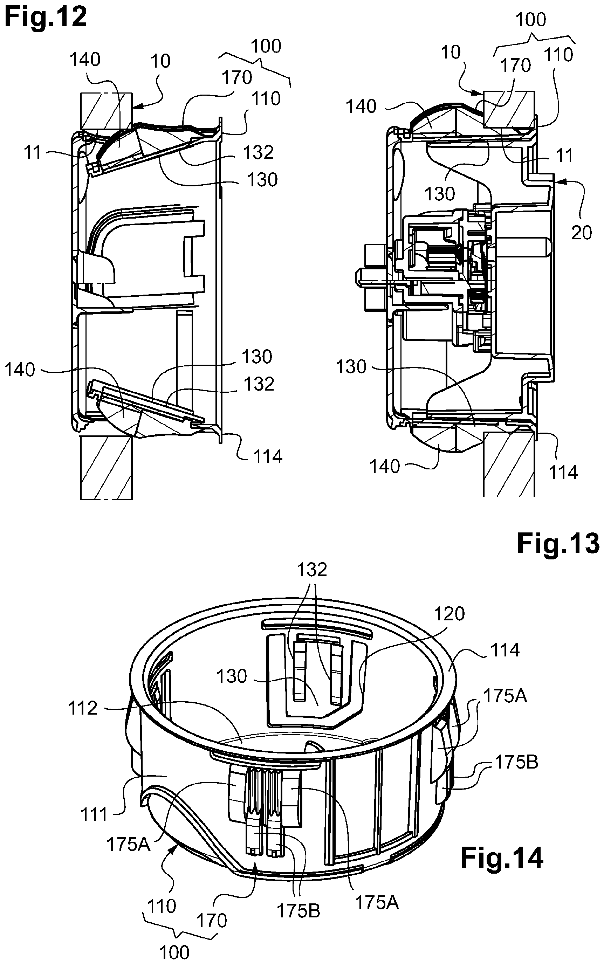

Le profil convexe de ces nervures rigides 140 leur permet de former une rampe qui facilite le déplacement du volet 130 depuis sa position déployée vers sa position rentrée, lorsque la boîte d'encastrement 100 est engagée dans la cloison creuse (voir figure 12).

On observe par ailleurs sur la figure 11 que la face intérieure 132 de chaque volet 130 est plane. C'est donc cette face intérieure 132 qui forme la partie interne du volet 130, c'est-à-dire la partie du volet 130 contre laquelle le module d'appareillage 20 vient en appui lorsque celui-ci est engagé à l'intérieur de la boîte d'encastrement 100.

Ainsi, comme le montre la figure 13, lorsque le module d'appareillage 20 est engagé à l'intérieur de la boîte électrique 100, il force les volets 130 à revenir en position déployée vers l'extérieur. La position des nervures rigides 140, du côté arrière des volets 130, permet d'éviter que celles-ci n'entravent le déploiement des volets 130.

Sur la figure 13, on observe que le module d'appareillage 20 présente ici une forme légèrement différente de celle du module illustré sur la figure 1, notamment parce que sa paroi latérale est ouverte vers l'arrière. La forme de ce module d'appareillage 20 ne modifie toutefois en rien le fonctionnement de l'invention.

Sur la figure 14, on a représenté une seconde variante de réalisation de la boîte d'encastrement 100.

Dans cette variante, il est également prévu que chaque volet 130 porte sur sa face externe une couche de matière compressible 170 qui se prolonge sur le corps 110 de la boîte électrique 100, autour de ce volet 130.

Chaque couche de matière compressible 170 présente une épaisseur constante, excepté au niveau de chacun des volets 130 où se dressent au moins une nervure souple 175A, 175B parallèle.

Ces nervures souples 175A, 175B s'étendent axialement (c'est-à-dire parallèlement à l'axe A1) et sont décalées en hauteur. Leurs extrémités sont ainsi situées à des hauteurs différentes le long de l'axe A1.

En pratique, il est ici prévu quatre nervures souples 175A, 175B parallèles, qui présentent des épaisseurs identiques.

Deux de ces nervures souples 175A, ici celles qui sont situées de part et d'autre des deux autres nervures souples 175B, s'étendent depuis le bord avant de la paroi latérale 111 du corps 110 de la boîte d'encastrement 100, jusqu'à environ mi-hauteur du corps 110 de la boîte d'encastrement 100.

Les deux autres nervures souples 175B sont en revanche décalées en hauteur par rapport aux premières nervures souples 175A. Elles s'étendent ici depuis la mi-hauteur du corps 110 de la boîte d'encastrement 100, vers l'arrière, jusqu'à proximité du fond 1112 du corps 110.

De cette manière, alors que les premières nervures souples 175A sont plus particulièrement agencées pour s'accrocher à l'arrière d'un panneau de plâtre de faible épaisseur, les deux autres nervures souples 175B sont plus particulièrement agencées pour s'accrocher à l'arrière d'un panneau de plâtre d'épaisseur importante.

Ici, chaque volet 130 porte, en saillie sur sa face intérieure, deux nervures parallèles 132 qui forment des rampes contre lesquelles le module d'appareillage 20 vient en appui lorsque celui-ci est engagé à l'intérieur de la boîte d'encastrement 100.

La présente invention n'est nullement limitée aux modes de réalisation décrits et représentés, mais l'homme du métier saura y apporter toute variante conforme à son esprit.

En particulier, on pourrait prévoir que la partie compressible ne s'étende pas tout autour du corps de la boîte d'encastrement, mais seulement au niveau des volets, sur une partie seulement de leurs faces externes.

On pourrait par ailleurs prévoir que chaque volet soit monté mobile en translation dans l'ouverture pratiquée en correspondance dans le corps de la boîte d'encastrement. On pourrait à cet effet prévoir que chaque volet se raccorde à la paroi latérale du corps de la boîte d'encastrement par une pluralité de languettes étirables.

On pourrait encore prévoir que le volet se rattache initialement par ses quatre côtés à la paroi latérale de la boîte, trois de ces côtés présentant toutefois un rétrécissement de matière formant des lignes sécables. Alors, lors de l'engagement de la boîte dans l'ouverture circulaire prévue dans le panneau de plâtre, ces lignes sécables se briseraient automatiquement, laissant le volet libre de pivoter autour de son quatrième bord.

## Revendications

1. Boîte d'encastrement (100) comportant :
- une paroi latérale (111) qui délimite un logement intérieur (115) d'accueil d'un module d'appareillage (20), et
- des moyens de fixation à une paroi (10 ; 10') qui comprennent au moins un volet (130) monté mobile au travers d'une ouverture (120) pratiquée dans la paroi latérale (111), entre une position rentrée dans laquelle il ne gêne pas l'insertion de la boîte d'encastrement (100) dans une cavité (11) prévue dans la paroi (10; 10') et une position déployée dans laquelle il bloque la boîte d'encastrement (100) dans ladite cavité (11),
chaque volet (130) présentant une face externe (134) faisant saillie à l'extérieur de la paroi latérale (111) lorsque le volet (130) est en position déployée **caractérisée en ce que** chaque volet (130) présente de plus une partie interne (132) qui fait au moins en partie saillie dans le logement intérieur (115) lorsque le volet (130) est en position rentrée, et **en ce que** la face externe (134) du volet est au moins en partie recouverte par une couche de matière compressible (170).

2. Boîte d'encastrement (100) selon la revendication précédente, dans laquelle la couche de matière compressible (170) recouvre l'ensemble de la face externe (134) dudit volet (130) et déborde de ce volet (130) pour recouvrir une partie de la face externe de la paroi latérale (111), tout autour de ladite ouverture (120).

3. Boîte d'encastrement (100) selon la revendication précédente, dans laquelle la couche de matière compressible (170) s'étend sur l'ensemble du contour de la paroi latérale (111).

4. Boîte d'encastrement (100) selon l'une des revendications précédentes, dans laquelle la couche de matière compressible (170) présente, au niveau de chaque volet (130), une surépaisseur (172, 182, 184, 186).

5. Boîte d'encastrement (100) selon la revendication précédente, dans laquelle ladite surépaisseur est constituée de picots (184) ou de nervures parallèles (172, 182).

6. Boîte d'encastrement (100) selon la revendication précédente, dans laquelle ladite surépaisseur comporte au moins deux nervures parallèles (175A, 175B) qui sont décalées en hauteur.

7. Boîte d'encastrement (100) selon l'une des trois revendications précédentes, dans laquelle chaque volet (130) comporte au moins une nervure rigide (140) en saillie de sa face externe (134), qui est au moins partiellement recouverte par ladite surépaisseur (172, 182, 184, 186).

8. Boîte d'encastrement (100) selon l'une des revendications précédentes, dans laquelle, lorsque le volet (130) est en position rentrée, sa partie interne (132) présente une face intérieure qui délimite au moins une rampe inclinée vers l'avant par rapport à la paroi latérale (111).

9. Boîte d'encastrement (100) selon l'une des revendications précédentes, dans laquelle chaque volet (130) comporte des moyens de rappel automatique en position rentrée lorsqu'aucun effort n'est exercé sur lui.

10. Boîte d'encastrement (100) selon l'une des revendications précédentes, dans laquelle chaque volet (130) est mobile à rotation par rapport à la paroi latérale (111), et présente une extrémité libre tournée vers l'arrière.

11. Boîte d'encastrement (100) selon les revendications 7 et 10, dans laquelle ladite nervure rigide (140) s'étend sur une partie seulement de la hauteur du volet (130), en majeure partie du côté de l'extrémité libre du volet (130).

12. Boîte d'encastrement (100) selon l'une des revendications précédentes, dans laquelle chaque volet (130) vient de formation avec au moins une partie de la paroi latérale (111) par moulage d'une seule pièce, et se rattache au bord de l'ouverture (120) par au moins une patte (131) faisant office de charnière.

13. Boîte d'encastrement (100) selon l'une des revendications précédentes, dans laquelle la couche de matière compressible (170) est rapportée ou surmoulée sur la paroi latérale (111).

14. Boîte d'encastrement (100) selon l'une des revendications précédentes, dans laquelle il est prévu une ouverture de passage d'un conducteur électrique et dans laquelle ladite couche de matière compressible (170) obture ladite ouverture de passage.

## Patentansprüche

1. Einbaudose (100), die
- eine Seitenwand (111), die einen inneren Aufnahmeraum (115) für ein Gerätemodul (20) begrenzt, und
- Mittel (10; 10') zum Befestigen an einer Wand, die wenigstens eine Klappe (130) aufweisen, die in einer in der Seitenwand (111) ausgebildeten Öffnung (120) zwischen einer zurückgezogenen Stellung, in der sie das Einsetzen der Einbaudose (100) in eine in der Wand (10; 10') vorgesehene Aushöhlung nicht stört, und einer ausgefahrenen Stellung, in der sie die Einbaudose (100) in der Aushöhlung (101) blockiert, beweglich montiert sind,
aufweist,
wobei jede Klappe (130) eine Außenseite (134) aufweist, die nach außerhalb der Seitenwand (111) vorsteht, wenn die Klappe (130) in der ausgefahrenen Stellung ist,
**dadurch gekennzeichnet, daß** jede Klappe (130) auch einen inneren Teil (132) aufweist, der wenigstens teilweise in dem inneren Aufnahmeraum (115) vorsteht, wenn die Klappe (130) in der zurückgezogenen Stellung ist, und daß die Außenseite (134) der Klappe wenigstens teilweise mit einer Schicht aus kompressiblem Material bedeckt ist.

2. Einbaudose (100) gemäß dem vorangehenden Anspruch, bei der die Schicht aus kompressiblem Material (170) die Gesamtheit der Außenseite (134) der Klappe (130) bedeckt und an der Klappe (130) übersteht, um einen Teil der Außenseite der Seitenwand (111) um die ganze Öffnung (120) herum zu bedecken.

3. Einbaudose (100) gemäß dem vorangehenden Anspruch, bei der sich die Schicht aus kompressiblem Material (170) über die Gesamtheit des Umfangs der Seitenwand (111) erstreckt.

4. Einbaudose (100) gemäß einem der vorangehenden Ansprüche, bei der die Schicht aus kompressiblem Material (170) im Bereich jeder Klappe (130) eine Überdicke (172, 182, 184, 186) aufweist.

5. Einbaudose (100) gemäß dem vorangehenden Anspruch, bei der die Überdicke durch Noppen (184) oder parallele Rippen (172, 182) gebildet ist.

6. Einbaudose (100) gemäß dem vorangehenden Anspruch, bei der die Überdicke wenigstens zwei parallele Rippen (175A, 175B) aufweist, die in der Höhe versetzt sind.

7. Einbaudose (100) gemäß einem der drei vorangehenden Ansprüche, bei der jede Klappe (130) wenigstens eine auf ihrer Außenseite (134) vorstehende steife Rippe (140) aufweist, die wenigstens teilweise von der Überdicke (172, 182, 184, 186) überdeckt ist.

8. Einbaudose (100) gemäß einem der vorangehenden Ansprüche, bei der dann, wenn die Klappe (130) in ihrer zurückgezogenen Stellung ist, ihr innerer Teil (132) eine Innenseite aufweist, die wenigstens eine gegenüber der Seitenwand (111) nach vorne geneigte Rampe begrenzt.

9. Einbaudose (100) gemäß einem der vorangehenden Ansprüche, bei der jede Klappe (130) Mittel aufweist, um dann automatisch in die zurückgezogene Stellung rückgeholt zu werden, wenn keine Kraft an ihr anliegt.

10. Einbaudose (100) gemäß einem der vorangehenden Ansprüche, bei der jede Klappe (130) gegenüber der Seitenwand (111) drehbar beweglich ist und ein nach hinten gerichtetes freies Ende aufweist.

11. Einbaudose (100) gemäß Anspruch 7 und 10, bei der sich die steife Rippe (140) nur über einen Teil der Höhe der Klappe (130) erstreckt, und zwar zum größten Teil auf der Seite des freien Endes der Klappe (130).

12. Einbaudose (100) gemäß einem der vorangehenden Ansprüche, bei der jede Klappe (130) mit wenigstens einem Teil der Seitenwand (111) durch einstückiges Formen gebildet ist und am Rand der Öffnung (120) durch wenigstens eine als Scharnier wirkende Lasche (131) befestigt ist.

13. Einbaudose (100) gemäß einem der vorangehenden Ansprüche, bei der die Schicht aus kompressiblem Material (170) zugefügt oder auf die Seitenwand (111) aufgeformt ist.

14. Einbaudose (100) gemäß einem der vorangehenden Ansprüche, bei der eine Durchgangsöffnung für einen elektrischen Leiter vorgesehen ist und bei der die Schicht aus kompressiblem Material (170) die Durchgangsöffnung verdeckt.

## Claims

1. A flush-mounted box (100) comprising:
• a side wall (111) that defines an internal housing (115) for receiving an accessory module (20); and
• fastener means for fastening to a wall (10; 10'), which fastener means comprise at least one flap (130) that is mounted to move through an opening (120) formed in the side wall (111), between a retracted position in which it does not hinder the insertion of the flush-mounted box (100) into a cavity (11) provided in the wall (10; 10'), and a deployed position in which it blocks the flush-mounted box (100) in said cavity (11), each flap (130) presenting an outer face (134) that projects out from the side wall (111) when the flap (130) is in its deployed position;
the flush-mounted box being **characterized in that** each flap (130) further presents an inner portion (132) that projects, at least in part, into the internal housing (115) when the flap (130) is in its retracted position; and **in that** the outer face (134) of the flap is covered, at least in part, by a layer of compressible material (170).

2. A flush-mounted box (100) according to the preceding claim, wherein the layer of compressible material (170) covers the entire outer face (134) of said flap (130) and extends beyond the flap (130) so as to cover a portion of the outer face of the side wall (111), all around said opening (120).

3. A flush-mounted box (100) according to the preceding claim, wherein the layer of compressible material (170) extends over the entire outline of the side wall (111).

4. A flush-mounted box (100) according to any preceding claim, wherein, at each flap (130), the layer of compressible material (170) presents extra thickness (172, 182, 184, 186).

5. A flush-mounted box (100) according to the preceding claim, wherein said extra thickness is constituted by spikes (184) or parallel splines (172, 182).

6. A flush-mounted box (100) according to the preceding claim, wherein said extra thickness comprises at least two parallel splines (175A, 175B) that are offset heightwise.

7. A flush-mounted box (100) according to any one of the three preceding claims, wherein each flap (130) includes at least one rigid spline (140) that projects from its outer face (134) and that is covered, at least in part, by said extra thickness (172, 182, 184, 186).

8. A flush-mounted box (100) according to any preceding claim, wherein, when the flap (130) is in its retracted position, its inner portion (132) presents an inner face that defines at least one sloping ramp that slopes towards the front relative to the side wall (111).

9. A flush-mounted box (100) according to any preceding claim, wherein each flap (130) includes return means for automatically returning it into its retracted position when no force is exerted thereon.

10. A flush-mounted box (100) according to any preceding claim, wherein each flap (130) is movable in pivoting relative to the side wall (111), and presents a free end that faces towards the rear.

11. A flush-mounted box (100) according to claim 7 and claim 10, wherein said rigid spline (140) extends over a fraction only of the height of the flap (130), for the most part beside the free end of the flap (130).

12. A flush-mounted box (100) according to any preceding claim, wherein each flap (130) is formed integrally with at least one portion of the side wall (111) by molding as a single piece, and is attached to the edge of the opening (120) via at least one tab (131) that acts as a hinge.

13. A flush-mounted box (100) according to any preceding claim, wherein the layer of compressible material (170) is fitted or over-molded on the side wall (111).

14. A flush-mounted box (100) according to any preceding claim, wherein a through opening is provided for passing an electrical conductor, and wherein said layer of compressible material (170) closes said through opening.
